# EUROPEAN PATENT APPLICATION

(11) **EP 4 342 918 A1**
(43) Date of publication of application: **27.03.2024**
(21) Application number: 22196754.0
(22) Date of filing: 21.09.2022
(51) Int. Cl.: C08F 110/06, C07F 7/18

(54) **PROCESS FOR THE SYNTHESIS OF STERICALLY CROWDED AND SYNTHETICALLY CHALLENGING ALKYL ALKOXY SILANES USING ORGANOLITHIUM REAGENTS**

(71) Applicant: SABIC Global Technologies B.V., 4612 PX Bergen op Zoom (NL)
(72) Inventor: SENTHIL KUMAR, Minor, 6160 GA Geleen (NL); PAGHABAR, Bharatkumar Ravji, 6160 GA Geleen (NL)
(74) Representative: Sabic Intellectual Property Group

(57) **Abstract**

A process for the preparation of mono- or di- alkyl alkoxy silanes according to Formula 3 or Formula 5, said process comprising the following step i) contacting an alkoxy silane according to formula 2 with an organolithium reagents according to Formula 1 to form a mono- or di- alkyl alkoxy silanes according to formula 3 and lithium compound according to formula 4

## Description

### Background

Various methods have been reported for the synthesis of mono- and di- alkyl alkoxy silanes via, hydrosilylation, alchololysis and by using the Grignard reagents at high temperatures.

In general, most of these methods, either lack conversion and selectivity or involves multi step protocols.

The hydrosilation method involves the use of costly reagents to afford the corresponding alkyl alkoxy silanes, albeit in low yield and selectivity.

Further, alcoholysis method involves treatment of high reactive dialkyl dichloro silanes with alcohols in the presence of base to give the required dialkylalkoxy silanes.

Finally, in the two-step Grignard method, the alkoxy silanes/alkyl alkoxy silanes are converted into the corresponding chloro-derivative (more reactive substrate), which on subsequent treatment with Grignard reagent gave the corresponding synthetically challenging alkyl alkoxy silanes.

Further, those methods are dangerous for the user or have drawback such as unreacted organomagensium reagents, which is very difficult to quench during work-up and in addition lacks conversion and selectivity, which results in low yield. Moreover, Grignard reagents tend to decompose at higher temperatures.

Hence, there is a need for an efficient and safer method for the synthesis of mono- and di- alkyl alkoxy silanes.

### Summary

It is an object of the present invention to provide a highly efficient, safe and mild method for the synthesis of mono- and di- alkyl alkoxy silanes using organolithium reagents.

The present invention relates to a process for synthesis of sterically crowded and synthetically challenging mono- or di- alkyl alkoxy silanes according to Formula 3

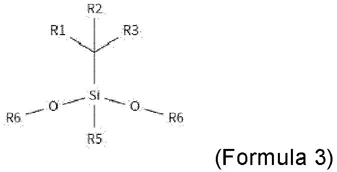

Wherein
R1, R2, R3 can be identical or different from each other and is selected from the group comprising hydrogen, alkyl or aryl group;
R5 is identical to O-R6 or is selected from the group comprising alkyl or aryl group R6 is selected from the group comprising alkyl or aryl group
using organolithium reagents according to Formula 1

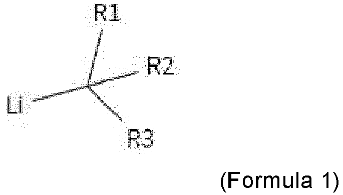

Wherein
R1, R2, R3 can be identical or different from each other and is selected from the group comprising Hydrogen, alkyl or aryl group;

Furthermore, the present invention relates, specifically to a process for the preparation of mono- or di- alkyl alkoxy silanes according to Formula 3 as shown in the reaction below.

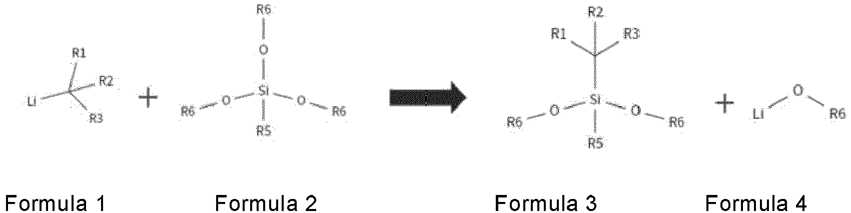

Wherein
R1, R2, R3 can be identical or different from each other and is selected from the group comprising hydrogen, alkyl or aryl group;
R5 is identical to O-R6 or is selected from the group comprising alkyl or aryl group R6 is selected from the group comprising alkyl or aryl group

In another embodiment, wherein R5 is identical to O-R6, meaning that Formula 2 is a tetra-alkoxysilane, an excess of organolithium reagents according to Formula 1 allow to continue the reaction in order to obtain di-alkyl alkoxy silanes according to Formula 5 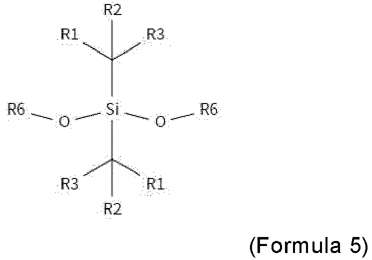 as shown in the reaction below:

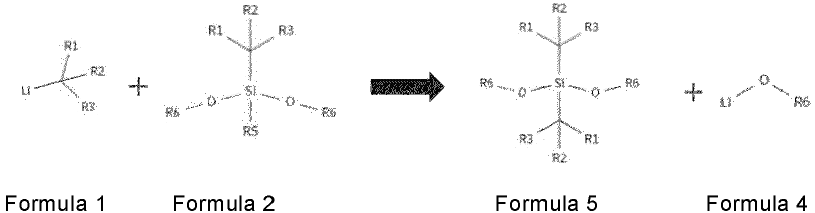

Preferred alkoxysilane according to formula 2 are: tetraethoxy silane, tetramethoxy silane, cyclopentyltrimethoxysilane, n-propyltriethoxy silane, n-propyltrimethoxy silane, Isopropyltrimethoxy silane, isopropyltriethoxy silane, n-butyltrimethoxy sialne, n-butyltriethoxy silane, ethyltrimethoxy silane, ethyltriethoxy silane, isobutyltrimethoxy silane, isobutyltriethoxy silane, t-butyltrimethoxy silane, t-butyltriethoxy silane, cyclohexyltrimethoxy silane, cyclohexyltriethoxy silane, methyltrimethoxy silane, methyltriethoxy silane, phenyltrimethoxy silane, phenyltriethoxy silane, naphthyltrimethoxy silane, naphthyltriethoxy silane, benzyltrimethoxy silane, benzyltriethoxy silane, substituted phenyltrimethoxy silane, substituted phenyltriethoxy silane.

The most preferred one are tetraethoxy silane, tetramethoxy silane, cyclopentyltrimethoxysilane, n-propyltriethoxy silane, n-propyltrimethoxy silane, Isopropyltrimethoxy silane

Preferred, organolithium reagents according to Formula 1 are selected from the list comprising: methyllithium, isopropyllithium, n-btuyllithium, s-butyllithium, t-butyllithium, vinyllithium, n-propyllithium, isobutyllithium, pentyllithium, s-pentyllithium, cyclopentyllithium, phenyllithium and substituted phenyllithium which may contain heteroatoms, such as oxygen (O), nitrogen (N), phosphorus (P), silicon (Si) or sulphur (S) or may contain an alkyl group.

The most preferred one are isopropyllithium, n-btuyllithium and t-butyllithium.

Another aspect of the invention is the use of mono- or di- alkyl alkoxy silanes according to Formula 3 or Formula 5 and prepare according to invention as external donor for a Ziegler Natta catalyst system during the polymerization of Polypropylene.

### Definitions

The following definitions are used in the present description and claims to define the stated subject matter. Other terms not cited below are meant to have the generally accepted meaning in the field.

"alkyl" as used in the present description means: an alkyl group being a functional group or side-chain consisting of carbon and hydrogen atoms. An alkyl group may be straight or branched and may be un-substituted or substituted. It may or may not contain heteroatoms, such as oxygen (O), nitrogen (N), phosphorus (P), silicon (Si) or sulphur (S).

Preferably, "alkyl group" as used in the present description is linear or branched C1-C7 alkyl group, as for example Methyl, Ethyl, Propyl, isopropyl, butyl, sec-Butyl, iso-butyl, t-Butyl, pentyl.

"aryl" as used in the present description means: an aryl group being a functional group or side-chain derived from an aromatic ring. An aryl group and may be un-substituted or substituted with straight or branched hydrocarbyl groups. It may or may not contain heteroatoms, such as oxygen (O), nitrogen (N), phosphorus (P), silicon (Si) or sulphur (S). An aryl group also encloses alkyl groups wherein one or more hydrogen atoms on the aromatic ring have been replaced by alkyl groups. Preferably, "aryl group" as used in the present description is having 5-15 carbon atoms.

"under extreme dry conditions" as used in the present description means: Moisture <10 ppm.

"room temperature" as used in the present invention means a temperature of 25 °C.

"ambient pressure" as used in the present invention means atmospheric pressure ( 1 atm), being 1013.25 mbar (101325 Pa).

The present invention is described below in more detail. All embodiments described with respect to one aspect of the present invention are also applicable to the other aspects of the invention, unless otherwise stated.

### Detailed description

The present invention relates to a process for the preparation of mono- or di- alkyl alkoxy silanes according to Formula 3, said process comprising the following step i) contacting an alkoxy silane according to formula 2 with an organolithium reagents according to Formula 1 to form a mono- or di- alkyl alkoxy silanes according to formula 3 or Formula 5 and lithium compound according to formula 4

In an embodiment, step i) comprises:
*contacting slowly and gradually alkoxy silane (Formula 2), which has been cool down to 10°C, with an organolithium reagent, preferably over a period of between 20 and 40 minutes and under constant stirring, while the temperature is maintained at 10 °C;
* after completion of the addition of organolithium reagent, the reaction mixture has been slowly warmed to room temperature and maintained at that temperature for a period of between 30 and 70 minutes;
* after, completion of the reaction, reaction mixture was slowly transferred to saturated NH₄Cl solution and stirred preferably over a period of between 20 and 40 minutes.
* Resulting solution was extracted with ethylacetate and combined organic layer was dried over anhydrous sodium sulphate and concentrated under reduced pressure (500 - 100 mmHg) to give the corresponding alkyl alkoxy silane in good yield.
* optionally, the crude product was further purified by distillation, preferably vacuum distillation.

In an embodiment, when a dialkyl alkoxy silanes is wanted meaning that the molecule has two "alkyl/aryl moieties" and 2 alkoxy group (OR6), the "alkyl/aryl moieties" can be the same or different.

By "alkyl/aryl moieties" mean a moiety formed by R1, R2 and R3 and link together to the same covalent bond of the Si atom.

The process in order to obtain a dialkyl alkoxy silanes can be a two step synthesis method or one pot method;
and
- if the alkyl/aryl moieties are identical, the organolithium reagent will be use in quantity 2 equivalent mole for 1 equivalent mole of alkoxy silane
- if the alkyl/aryl moieties are different, 2 different organolithium reagent will be use sequentially in quantity of 1 equivalent mole for 1 equivalent mole of alkoxy silane.

### EXAMPLES

The present invention is further elucidated based on the Examples below which are illustrative only and not considered limiting to the present invention. All reactions are carried out under nitrogen atmosphere and under extreme dry conditions meaning under 10 ppm of moisture. If no information is provided regarding the temperature, the temperature is room temperature. All water used was demineralized water.

### Example 1:Synthesis of triethoxy(isopropyl)silane

In a dry flask fitted with reflux condenser, overhead stirrer and nitrogen inlet, tetraethoxy silane (1 eq) was taken and cooled to 10 °C.
isopropyllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give triethoxy(isopropyl)silane. Crude product was further purified by vacuum distillation and the final yield is 92%.

### Example 2:Synthesis of di-tert-butyl-di-methoxysilanes

In a dry flask fitted with reflux condenser, overhead stirrer and nitrogen inlet, tetramethoxy silane (1 eq) was taken and cooled to 10 °C.

t-butylllithium (2 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give di-tert-butyl-di-methoxysilanes. Crude product was further purified by vacuum distillation and the final yield is 88%

### Example 3: Synthesis of tert-butyldiethoxy(propyl)silane

In a dry flask fitted with reflux condenser, overhead stirrer and nitrogen inlet, n-propyltriethoxy silane (1 eq) was taken and cooled to 10 °C.

t-butylllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give tert-butyldiethoxy(propyl)silane. Crude product was further purified by vacuum distillation and the final yield is 82%

### Example 4: Synthesis of tert-butyldimethoxy(propyl)silane

In a dry flask fitted with reflux condenser, overhead stirrer and nitrogen inlet, n-propyltrimethoxy silane (1 eq) was taken and cooled to 10 °C.

t-butylllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give tert-butyldimethoxy(propyl)silane. Crude product was further purified by vacuum distillation and the final yield is 86%

### Example 5: Synthesis of Cyclopentyl(isopropyl)dimethoxysilane

In a dry flask fitted with reflux condenser, overhead stirrer and nitrogen inlet, cyclopentyltrimethoxy silane (1 eq) was taken and cooled to 10 °C.
isopropyllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give Cyclopentyl(isopropyl)dimethoxysilane. Crude product was further purified by vacuum distillation and the final yield is 88%

### Example 6: Synthesis of n-Butyltriethoxysilane

In a dry flask fitted with reflux condenser, overhead stirrer and nitrogen inlet, tetraethoxy silane (1 eq) was taken and cooled to 10 °C.

n-butyllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give n-Butyltriethoxysilane. Crude product was further purified by vacuum distillation and the final yield is 75%

### Example 7: Synthesis of Phenyltrimethoxy silane

In a dry flask fitted with reflux condenser, overhead stirrer and nitrogen inlet, tetramethoxy silane (1 eq) was taken and cooled to 10 °C.

phenyllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give Phenyltrimethoxy silane. Crude product was further purified by vacuum distillation and the final yield is 88%

### Example 8: Synthesis of di-phenyldimethoxy silane

In a dry flask fitted with reflux condenser, overhead stirrer and nitrogen inlet, tetramethoxy silane (1 eq) was taken and cooled to 10 °C.

phenyllithium (2 eq) has been added constantly and with continuous rate of addition during 30 minutes under nitrogen atmosphere under constant stirring. After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give di-phenyldimethoxy silane. Crude product was further purified by vacuum distillation and the yield is 80%.

### Example 9: Synthesis of t-butylisopropyldimethoxysilane

### Two step method:

### 1. Synthesis of isopropyltrimethoxysilane:

In a dry flask fitted with reflux condenser, overhead stirrer and nitrogen inlet, tetramethoxy silane (1 eq) was taken and cooled to 10 °C.
isopropyllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give isopropyltrimethoxysilane. Crude product was further purified by vacuum distillation and the final yield is 85%

### 2. Synthesis of t-Butylisopropyldimethoxysilane

In a dry flask fitted with reflux condenser, overhead stirrer and nitrogen inlet, trimethoxy(isopropyl)silane (1 eq, obtained from previous step (1.Synthesis of isopropyltrimethoxysilane) was taken and cooled to 10 °C.

t-butyllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of NH₄Cl mmHg to give t-Butylisopropyldimethoxysilane. Crude product was further purified by vacuum distillation and the yield is 85%, the final yield from tetramethoxy silane is 72.3%

### Example 10: Synthesis of t-butylisopropyldimethoxysilane

### One pot method:

In a dry flask fitted with reflux condenser, overhead stirrer and nitrogen inlet, tetramethoxy silane (1 eq) was taken and cooled to 10 °C.
isopropyllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was cooled to 10 °C.

t-butyllithium (1 eq) has been added constantly and with continuous rate of addition during 30 minutes under nitrogen atmosphere under constant stirring.

After completion of the addition, the reaction mixture was stirred and gradually warmed from 10°C to room temperature (25 °C) over a period of 1 h.

After, completion of the reaction, reaction mixture was slowly transferred to saturated NH₄Cl solution in another flask under a period of 10 minutes and the solution has been stirred for 30 more minutes.

Resulting solution was extracted with ethylacetate and the combined organic layer was dried over anhydrous sodium sulphate and concentrated under reduced pressure of 500 - 100 mmHg to give t-Butylisopropyldimethoxysilane Crude product was further purified by vacuum distillation and the yield is 80%.

## Claims

1. A process for the preparation of mono- or di- alkyl alkoxy silanes according to Formula 3, said process comprising the following step i) contacting an alkoxy silane according to formula 2 with an organolithium reagents according to Formula 1 to form a mono- or di- alkyl alkoxy silanes according to formula 3 and lithium compound according to formula 4, as shown in the reaction below 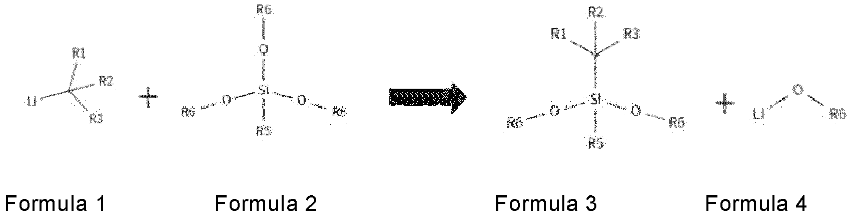 Wherein
R1, R2, R3 can be identical or different from each other and is selected from the group comprising hydrogen, alkyl or aryl group;
R5 is identical to O-R6 or is selected from the group comprising alkyl or aryl group R6 is selected from the group comprising alkyl or aryl group

2. The process according to claim 1, wherein R5 is identical to O-R6, meaning that Formula 2 is a tetra-alkoxysilane, an excess of organolithium reagents according to Formula 1 allow to continue the reaction in order to obtain di-alkyl alkoxy silanes according to Formula 5 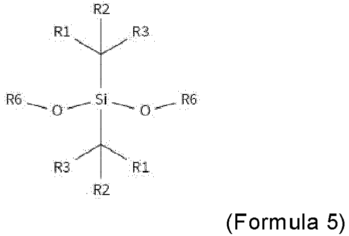 as shown in the reaction below:

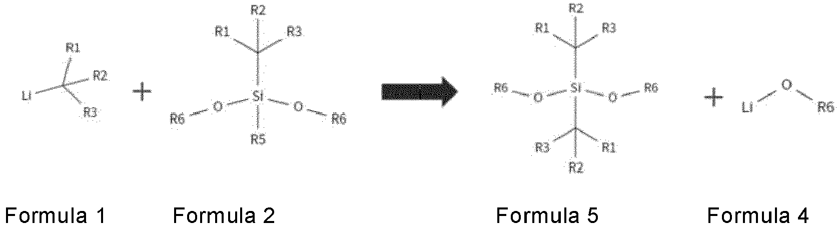

3. The process according to any one of the preceding claims, wherein alkoxysilane according to formula 2 are selected from the list comprising tetraethoxy silane, tetramethoxy silane, cyclopentyltrimethoxysilane, n-propyltriethoxy silane, n-propyltrimethoxy silane, Isopropyltrimethoxy silane, isopropyltriethoxy silane, n-butyltrimethoxy sialne, n-butyltriethoxy silane, ethyltrimethoxy silane, ethyltriethoxy silane, isobutyltrimethoxy silane, isobutyltriethoxy silane, t-butyltrimethoxy silane, t-butyltriethoxy silane, cyclohexyltrimethoxy silane, cyclohexyltriethoxy silane, methyltrimethoxy silane, methyltriethoxy silane, phenyltrimethoxy silane, phenyltriethoxy silane, naphthyltrimethoxy silane, naphthyltriethoxy silane, benzyltrimethoxy silane, benzyltriethoxy silane, substituted phenyltrimethoxy silane, substituted phenyltriethoxy silane.

4. The process according to any one of the preceding claims, wherein organolithium reagents according to Formula 1 are selected from the list comprising methyllithium, isopropyllithium, n-btuyllithium, s-butyllithium, t-butyllithium, vinyllithium, n-propyllithium, isobutyllithium, pentyllithium, s-pentyllithium, cyclopentyllithium, phenyllithium and substituted phenyllithium which may contain heteroatoms, such as oxygen (O), nitrogen (N), phosphorus (P), silicon (Si) or sulphur (S) or may contain an alkyl group.

5. The process according to any of the preceding claims, wherein the step i) is perform under nitrogen atmosphere and under extreme dry conditions under 10 ppm of moisture.

6. A process according to any one of the preceding claims, wherein step i) comprises:
*contacting slowly and gradually alkoxy silane (Formula 2), which has been cool down to 10°C, with an organolithium reagent, preferably over a period of between 20 and 40 minutes and under constant stirring, while the temperature is maintained at 10 °C;
* after completion of the addition of organolithium reagent, the reaction mixture has been slowly warmed to and maintained at that temperature for a period of between 50 and 70 minutes;
* after, completion of the reaction, reaction mixture was slowly transferred to saturated NH₄Cl solution and stirred preferably over a period of between 20 and 40 minutes.
* Resulting solution was extracted with ethylacetate and combined organic layer was dried over anhydrous sodium sulphate and concentrated under reduced pressure to give the corresponding alkyl alkoxy silane in good yield.
* optionally, the crude product was further purified by distillation, preferably vacuum distillation.

7. Process according to the preceding claim wherein a dialkyl alkoxy silanes is prepared, can be a two step synthesis method or one pot method;
and
• if the alkyl/aryl moieties are identical, the organolithium reagent will be use in quantity 2 equivalent mole for 1 equivalent mole of alkoxy silane
• if the alkyl/aryl moieties are different, 2 different organolithium reagent will be used sequentially in quantity of 1 equivalent mole for 1 equivalent mole of alkoxy silane
wherein each alkyl/aryl moieties are a moiety formed by R1, R2 and R3 and link together to the same covalent bond of the Si atom.

8. Use of mono- or di- alkyl alkoxy silanes according to Formula 3 and prepare according to one of the preceding claim as external donor for a Ziegler Natta catalyst system during the polymerization of Polypropylene.
